# EUROPÄISCHE PATENTANMELDUNG

(11) **EP 0 670 236 A1**
(43) Veröffentlichungstag der Anmeldung: **06.09.1995**
(21) Anmeldenummer: 95102181.5
(22) Anmeldetag: 16.02.1995
(51) Int. Cl.: B60L 1/10, H02M 7/48

(54) **Energieversorgungseinrichtung für Reisezugwagen**

(30) Priorität: 01.03.1994 DE 9403447 U
(71) Anmelder: SIEMENS AKTIENGESELLSCHAFT, D-80333 München (DE)
(72) Erfinder: Fuchs, Andreas, Dr., D-91056 Erlangen (DE); Seibert, Manfred, Dipl.-Ing., D-91315 Höchstadt (DE); Möller, Dietrich, Dr., D-91058 Erlangen (DE); Weigel, Wolf-Dieter, Dr., D-91077 Kleinsendelbach (DE)

(57) **Zusammenfassung**

Die Erfindung bezieht sich auf eine Energieversorgungseinrichtung (2) für Reisezugwagen, bestehend aus einem Eingangssteller mit Zwischenkreisfilter (6) und einem Wechselrichter (8) mit nachgeschaltetem Transformator (10). Erfindungsgemäß wird als Eingangssteller ein Hochsetzsteller (4) verwendet. Dieser Hochsetzsteller (4) und der Wechselrichter (8) weisen jeweils als Stromrichterventile schnellschaltende, abschaltbare Leistungshalbleiter (26,34) auf. Somit erhält man ein zentrales Energieversorgungssystem (2) für Reisezugwagen, das kompakt und wirtschaftlich ist und dessen Leistungsfaktor sich wesentlich verbessert hat.

## Beschreibung

Die Erfindung bezieht sich auf eine Energieversorgungseinrichtung für Reisezugwagen, bestehend aus einem Eingangssteller mit Zwischenkreisfilter und einem Wechselrichter mit nachgeschaltetem Transformator.

Im Aufsatz "Energieversorgungseinrichtungen für Reisezugwagen", abgedruckt in der DE-Zeitschrift "ETR", Band 26, 1977, Heft 10, Seiten 665 bis 672, werden der Stand der Entwicklung, Erkenntnisse und Folgerungen für künftige Entwicklungsmöglichkeiten betreffend Energieversorgungseinrichtungen für Reisezugwagen behandelt. In diesem Aufsatz werden ein zentrales Energieversorgungssystem und ein dezentrales Energieversorgungssystem vorgestellt.

Das zentrale Energieversorgungssystem besteht aus einem Gleichrichter, einem ersten Filter, einem Chopper, einem zweiten Filter, einem Wechselrichter, einem Transformator und einem geregelten Gleichrichter. Der Gleichrichter ist eingangsseitig an einer Zugsammelschiene angeschlossen und ausgangsseitig mit dem ersten Filter elektrisch leitend verbunden. An der Zugsammelschiene kann eine Spannung eines von vier bekannten Bahnspannungssystemen (AC 1000 V, 16 2/3 Hz; AC 1500 V, 50 Hz; DC 1500 V; DC 3000 V) anstehen. Der Ausgang des Filters ist mittels des Choppers und des zweiten Filters mit dem Eingang des Wechselrichters verknüpft. Am Ausgang dieses Wechselrichters ist der Transformator angeschlossen, an dessen Sekundärwicklung ein dreiphasiges Ausgangsspannungssystem mit einer Frequenz von 50 Hz ansteht. An diesem Drehspannungssystem ist einerseits der geregelte Gleichrichter für die Batterieladung einer Bordbatterie und andererseits Motoren für einen Kompressor und für einen Ventilator angeschlossen.

Das Dreiphasenbordnetz, das von einer zentralen Umformungseinrichtung gespeist wird, ist kein starres Netz. Aus wirtschaftlichen Gründen soll einerseits die Leistung der Umformungseinrichtung möglichst den Leistungsbedarf eines Wagens nicht überschreiten, andererseits müssen aber die Anlaufstromspitzen der Motoren berücksichtigt werden, so daß ein Mehraufwand bei der Leistungsdimensionierung oder schaltungstechnischer Art notwendig ist. Umformungseinrichtungen und Verbraucher müssen deshalb sorgsam aufeinander abgestimmt sein.

Von besonderer Bedeutung dürfte jedoch das beträchtliche Absinken des Wirkungsgrades im Teillastbereich sein. Ohne Kühlbetrieb hat ein Wagen einen Bedarf an umgeformter Energie von nur 2 bis 4 kW. Der Wirkungsgrad eines statischen Umrichters bei einer Leistung von 30 bis 35 kVA liegt dann nur noch bei 15 bis 40 %. Dieser relativ schlechte Wert gilt etwa während der Hälfte der Einsatzzeit, denn Energie zum Kühlen wird nur etwa während der restlichen Hälfte verlangt. Aufgrund dieses schlechten Wirkungsgrades im Teillastbereich ist das Dreiphasenbordnetz für einen klimatisierten Wagen relativ aufwendig und für einen Wagen ohne Kälteteil wirtschaftlich in keiner Weise vertretbar.

Bei den dezentralen Umformungseinrichtungen gibt es vielfältigere Gestaltungsmöglichkeiten, insbesondere bei denen für die Kälteerzeugung. Ein bewährtes dezentrales Energieumformungssystem besteht aus statischen Elementen für die Versorgung der 24 V- und der 220 V-Verbraucher und einem Antrieb für den Kompressor. Wird der Kälteerzeugungsteil abgetrennt, bleibt ein voll funktionsfähiges optimales Energieversorgungssystem für die große Zahl nicht klimatisierter Wagen bestehen. Dies hat den Vorteil, daß alle Wagen, ob klimatisiert oder nicht, mit dem gleichen Grundenergieversorgungssystem ausgestattet werden können. Gleichzeitig bringt für klimatisierte Wagen das Verwenden von Bauteilen aus den großen Serien nichtklimatisierter Wagen Preisvorteile bei der Beschaffung. Der Wirkungsgrad ist mit und ohne Kälteerzeugungsanlage immer optimal, weil die nicht benötigten Teile abgeschaltet werden und keine Leerlaufverluste verursachen. Je nach Belastung und Art der Eingangsspannung liegt der Wirkungsgrad um das 1,5- bis 3,5-fache über dem der zentralen Umformungseinrichtung, wobei diese Werte für den Teillastbereich gelten.

Aus der DE-Zeitschrift "Elektrische Bahnen", Jahrgang 84, 1986, Heft 11, Seiten 333 bis 342, ist ein Drehstrom-Bordnetzumrichter und ein Hilfsbetriebsumrichter bekannt. Mittels eines Drehstrom-Bordnetzumrichters können Hilfsantriebe wie Lüfter, Pumpen und Kompressoren von Reisezugwagen wirtschaftlich gespeist werden. Der Drehstrom-Bordnetzumrichter erzeugt Drehspannung konstanter Spannung und konstanter Frequenz. Die in diesem Aufsatz vorgestellte Gerätereihe ist für den Anschluß an Gleichspannungs-Fahrdrahtnetze ausgeführt. Das Bild 7a dieser Entgegenhaltung zeigt das Blockschaltbild, Bild 7b das Schaltbild des Drehstrom-Bordnetzumrichters mit Gleichspannungseinspeisung und Bild 7c das Gerät. Die wesentlichen Komponenten dieses Drehstrom-Bordnetzumrichters sind ein Gleichstromsteller mit eingangsseitigem Netzfilter und Zwischenkreisfilter, ein Drehstromwechselrichter, ein Drehstromtransformator, ein Eigenlüfter, ein Batterieladegleichrichter sowie eine Steuerung. Einer der beiden Drehstromausgänge speist die leistungsstarken Verbraucher, die außerhalb des Führer- und Fahrgastraumes liegen. Es handelt sich dabei um Luftkompressoren sowie Lüfter für Fahrmotor und Stromrichter. Der zweite Drehstromausgang dient zur potentialfreien Speisung der im Führer- und Fahrgastraum untergebrachten Verbraucher. Die Gleichstromausgänge versorgen die Gleichstromverbraucher und die Batterieladung. Über den Gleichstromsteller wird die Zwischenkreisspannung so geregelt, daß die Batterieladespannung konstant ist. Dadurch ergibt sich auch für die Drehstrommotoren eine nahezu konstante Spannung. Schwankungen der Netzspannung, die zwischen -30 % bis +20 % der Netzspannung liegen können, wirken sich auf die Ausgangsspannung nicht aus. Der Drehstrom-Bordnetzumrichter ist für eine bestimmte Dauerlast und für eine festgelegte Kurzzeitüberlastung ausgelegt. Das Regelkonzept ist so ausgeführt worden, daß Spannung und Frequenz am Ausgang des Drehstromumrichters konstant bleiben.

Die Hilfsbetriebeumrichter erzeugen für den Hochlauf und den stationären Betrieb in der Amplitude und Frequenz steuerbare Drehspannungen. Beim Hochlauf werden somit überhöhte Anlaufströme vermieden, und im stationären Betrieb ist eine Anpassung der Versorgung an die gewünschten Belastungsverhältnisse möglich. Im Bild 8a dieser Entgegenhaltung ist das Blockschaltbild und in Bild 8b das Schaltbild des Leistungsteils eines Hilfsbetriebeumrichters dargestellt. Die wesentlichen Komponenten dieses Hilfsbetriebeumrichters sind ein gesteuerter Gleichrichter mit der halbgesteuerten zweipulsigen Brükkenschaltung und dem Zwischenkreisfilter, ein Drehstromwechselrichter sowie eine Steuerung. Eingangsseitig wird der Hilfsbetriebeumrichter aus der Hilfsbetriebewicklung des Haupttransformators gespeist. Die Steuerung gewährleistet im gesamten Bereich Proportionalität zwischen Spannung und Frequenz.

In der DE-Zeitschrift "Elektrische Bahnen", Band 78, 1980, Heft 8, Seiten 209 bis 214, ist eine wirtschaftliche Energieversorgung von Reisezugwagen bei Mehrspannungsbetrieb vorgestellt. Die gestiegenen Komfortansprüche und die wachsende Zahl grenzüberschreitender Zugverbindungen erfordern den zunehmenden Einsatz klimatisierter Reisezugwagen für den Mehrspannungsbetrieb. Die Energieversorgung erfolgt aus der Zugsammelschiene, die von der Lokomotive oder von stationären Anlagen mit verschiedenen Stromsystemen gespeist werden kann. Bei der Entwicklung einer wirtschaftlichen Energieversorgung von Reisezugwagen sind hoher Aufwand, d.h. hohes Gewicht und schlechter Wirkungsgrad unter den geänderten energiepolitischen Bedingungen zu vermeiden. Ein reduziertes Gewicht spart Traktionsenergie und ein guter Wirkungsgrad bedeutet geringe Umformungsverluste. Unter diesen übergeordneten Zielvorstellungen ist ein Viersystemumrichter entwickelt, der aus einer Kombination von bewahrten Betriebsmitteln und moderner Leistungselektronik besteht. Dieser Viersystemumrichter zeigt, daß die wirtschaftlichen Lösungen nicht unbedingt durch den ausschließlichen Einsatz modernster Techniken, sondern oft nur durch gleichzeitige Anwendung von Erkenntnissen und Elementen der klassischen Elektrotechnik realisiert werden. Die Verwendung einer Gruppiereinrichtung ermöglicht eine optimale Dimensionierung aller Elemente. So wird der Transformator bei Wechselstromspeisung direkt angeschlossen und auf die Zwischenschaltung lastungselektronischer Betriebsmittel verzichtet. Bei Gleichstromeinspeisung wird der aus zwei Teilen bestehende Hochspannungswechselrichter in Abhängigkeit von der angelegten Spannung in Reihe oder parallel gruppiert, so daß die eingesetzten leistungselektronischen Bauelemente stets gut ausgelastet sind. Einen wesentlichen Anteil am erzielten positiven Gesamtergebnis hat die vollkommen neuartige Transformatorschaltung, bei der die niedrige Frequenz von 16 2/3 Hz nicht mehr die Baugröße bestimmt. Der Starkstromteil besteht aus dem Zugsammelschienenabzweig mit Sicherung, Schützen und Vorwiderstand, der Gruppiereinrichtung, dem Hochspannungwechselrichter und dem Transformator, an den die verschiedenen Verbraucher angeschlossen werden. Transformator und Hochspannungswechselrichter dieser Viersystemumrichterschaltung sind so ausgelegt, daß im Dauerbetrieb Verbraucher mit folgenden Spannungs- und Leistungswerten versorgt werden können: 600 V/27 kVA, 220 V/5 kVA und 57 V/8 kVA. Die Gruppiereinrichtung hat die Aufgabe, die Betriebsmittel zu einer dem speisenden Stromsystem angepaßten, funktionsfähigen Anlage zusammenzuschalten. Sie besteht aus einer elektronischen Steuereinrichtung einer elektromechanischen Umschalteinrichtung. Die Steuereinrichtung erkennt das an der Zugsammelschiene angebotene Stromsystem und steuert die Umschalteinrichtung. Bei der Gruppierung für Gleichspannung 3 kV sind die beiden Teile des Hochspannungs-Wechselrichters in Reihe geschaltet. So erhält jeder Teilwechselrichter 1,5 kV und gibt aufgrund seines Schaltungsprinzips eine Rechtecksspannung 750 V,50 Hz zur Speisung der beiden Transformator-Primärwicklungen ab. Bei der Gruppierung für Gleichspannung 1,5 kV sind die beiden Teile des Hochspannungswechselrichters parallel geschaltet. Transformator- und Verbraucheranschluß entsprechen der Gruppierung 3 kV. Bei der Gruppierung für Wechselspannung 1,5 kV, 50 Hz wird der Hochspannungs-Wechselrichter nicht benötigt. Die Transformator-Primärwicklungen mit je 750 V Netzspannung werden in Reihe geschaltet und direkt mit der Spannung der Zugsammelschiene gespeist. Bei der Gruppierung für Wechselspannung 1 kV, 16 2/3 Hz und 50 Hz wird der Hochspannungs-Wechselrichter ebenfalls nicht benötigt. Als Hochspannungs-Wechselrichter ist ein sogenannter Parallelwechselrichter, dessen Grundschaltung mit paralleler Anordnung der Kommutierungskapazität und der Transformator-Primärwicklung versehen ist, vorgesehen, der in drei Varianten ausgeführt ist: Mittelpunkt in der Transformator-Primärwicklung, Mittelpunkt in der Gleichspannungsquelle und Brückenschaltung.

Aus der DE-Zeitschrift "Brown Boveri Technik", Heft 5, 1985, Seiten 229 bis 234, ist ein Ladegerät für ein Elektrofahrzeug bekannt. Da die Energieversorgungsunternehmen mehr und mehr netzfreundliche Verbraucher mit geringem Blind- und Verzerrungs-Leistungsbedarf fordern, kann dem Wechselstromnetz nur mit einem Hochsetzsteller ein weitgehend sinusförmiger, oberschwingungsarmer Strom mit cosφ=1 entnommen werden. Der Hochsetzsteller des Ladegeräts sorgt dafür, daß die Spannung am Zwischenkreiskondensator immer größer ist als der Scheitelwert der Netzspannung. Der Wechselrichter erzeugt aus dieser Gleichspannung eine hochfrequente rechteckförmige Wechselspannung, deren Amplitude halb so groß ist wie die Spannung am Zwischenkreiskondensator. Somit ist der für diese hochfrequente rechteckförmige Spannung dimensionierte Transformator weitaus kleiner und leichter als ein entsprechender 50-Hz-Transformator.

Der Erfindung liegt nun die Aufgabe zugrunde, eine Energieversorgungseinrichtung für Reisezugwagen anzugeben, deren Einbaumasse erheblich reduziert ist, deren Leistungsfaktor erheblich verbessert ist und die sowohl an Gleich- als auch an Wechselspannung betrieben werden kann.

Diese Aufgabe wird erfindungsgemäß dadurch gelöst, daß als Eingangssteller ein Hochsetzsteller verwendet wird und daß dieser Hochsetzsteller und der Wechselrichter jeweils als Stromrichterventil schnellschaltende, abschaltbare Leistungshalbleiter aufweisen.

Durch den netzfreundlichen Hochsetzsteller, der direkt mit der Eingangsspannung (Zugsammelschienenspannung) verbunden ist, wird am Spannungszwischenkreis eine geregelte Gleichspannung erzeugt, die in ihrem Wert höher als der Scheitelwert der Eingangsspannung ist. Mit dem Hochsetzsteller wird neben der Verbesserung der Netzfreundlichkeit für den Wechselrichter eine stabilisierte Gleichspannung zur Verfügung gestellt, so daß hier keine weiteren Regeleingriffe erforderlich sind. Der Wechselrichter kann wegen des Betriebs an konstanter Spannung wesentlich wirtschaftlicher dimensioniert werden als bisher, wo der Wechselrichter unmittelbar an der schwankenden Eingangsspannung betrieben wurde. Damit wird der Mehraufwand für den Eingangssteller kompensiert.

Durch die Kombination der kennzeichnenden Merkmale des Anspruchs 1 erhält man ein zentrales Energieversorgungssystem für Reisezugwagen, ohne daß dieses die eingangs genannten Nachteile aufweist. Durch diesen verbesserten Aufbau eines zentralen Energieversorgungssystems reduziert sich dessen Einbaumasse erheblich. Außerdem verbessert sich der Leistungsfaktor wesentlich und das zentrale Energieversorgungssystem kann an Gleich- oder Wechselspannung der internationalen Bahnnetze betrieben werden. Auch der Wirkungsgrad verbessert sich, so daß man eine wirtschaftliche, kompakte zentrale Energieversorgungseinrichtung für Reisezugwagen erhält.

Bei einer weiteren Energieversorgungseinrichtung, die aus mehreren erfindungsgemäßen Energieversorgungseinrichtungen besteht, sind diese Energieversorgungseinrichtung eingangsseitig elektrisch in Reihe und ausgangsseitig elektrisch parallel geschaltet. Eine solche Energieversorgungseinrichtung hat den Vorteil, daß die für die Versorgung von Reisezugwagen übliche hohe Eingangsspannung auf mehrere, spannungsmäßig entsprechend gering beanspruchte Teilschaltungen aufgeteilt werden kann und die Netzfreundlichkeit durch Summierung der Pulsfrequenzen der eingangsseitigen Hochsetzsteller weiter verbessert wird. Die Mehrfach-Reihenschaltung der Hochsetzsteller ermöglicht bei versetzter Taktung eine Vervielfachung der wirksamen Arbeitsfrequenz der Hochsetzsteller. Damit wird es möglich, bis zu hohen Frequenzen aktive Störströme auf der Netzseite zu beeinflussen bzw. zu unterdrücken. Insbesondere können dadurch für bestimmte Frequenzen bzw. Frequenzbereiche hohe Eingangsimpedanzen ohne die bisher erforderlichen großen, schweren, passiven Komponenten realisiert werden. Dies hat entscheidende Bedeutung, da in Bahnnetzen mit Rücksicht auf die zur Gleisfreimeldung eingesetzten Signalfrequenzen für bestimmte Frequenzen sehr hohe Impedanzen gefordert werden müssen. Durch die Mehrfach-Reihenschaltung in Verbindung mit der versetzten Taktung können für bestimmte Frequenzen hohe Eingangsimpedanzen erzeugt werden, wodurch auf die bisherigen großen, schweren passiven Impedanzen ganz oder teilweise verzichtet werden kann. Das Prinzip der modularen Mehrfach-Reihenschaltung von Hochsetzstellern mit Wechselrichtern führt bei ausgangsseitiger Parallelschaltung zu einer inhärent weitgehend symmetrischen Last- und Spannungsaufteilung auf der Eingangsseite.

Bei einer weiteren Energieversorgungseinrichtung, die aus mehreren erfindungsgemäßen Energieversorgungseinrichtungen besteht, sind diese Energieversorgungseinrichtungen eingangsseitig mittels einer Umschalteinrichtung elektrisch in Reihe oder parallel und ausgangsseitig parallel geschaltet. Diese Energieversorgungseinrichtung hat den Vorteil, bei ähnlicher installierter Leistung der Teilschaltungen und unter Beibehaltung der summarischen Ausgangsspannungs-Leistung an die unterschiedlichen Gleich- und Wechselspannungen der internationalen Bahnnetze (AC 1000 V, 16 2/3 Hz; AC 1500 V, 50 Hz; DC 1500 V; DC 3000 V) und die Toleranzen dieser Spannungen ohne großen Mehraufwand angepaßt werden zu können.

Vorteilhafte Ausgestaltungen der Komponenten der erfindungsgemäßen Energieversorgungseinrichtung sind den Ansprüchen 4 bis 8 zu entnehmen.

Zur weiteren Erläuterung der Erfindung wird auf die Zeichnung bezug genommen, in der mehrere Ausführungsformen der erfindungsgemäßen Energieversorgungseinrichtung für Reisezugwagen schematisch veranschaulicht sind.
- Figur 1: zeigt ein Blockschaltbild einer ersten Ausführungsform der erfindungsgemäßen Energieversorgungseinrichtung für Reisezugwagen, die
- Figur 2: zeigt ein Blockschaltbild einer zweiten Ausführungsform einer Energieversorgungseinrichtung, bestehend aus mehreren Energieversorgungseinrichtungen gemäß FIG 1, die
- Figur 3: zeigt ein Blockschaltbild einer dritten Ausführungsform einer aus mehreren Energieversorgungseinrichtungen gemäß FIG 1 bestehenden Energieversorgungseinrichtung, in
- Figur 4: ist eine erste Ausführungsform eines Hochsetzstellers und in
- Figur 5: ist eine zweite Ausführungsform eines Hochsetzstellers dargestellt, wogegen die
- Figur 6: eine erste Ausführungsform eines Wechselrichters zeigt.

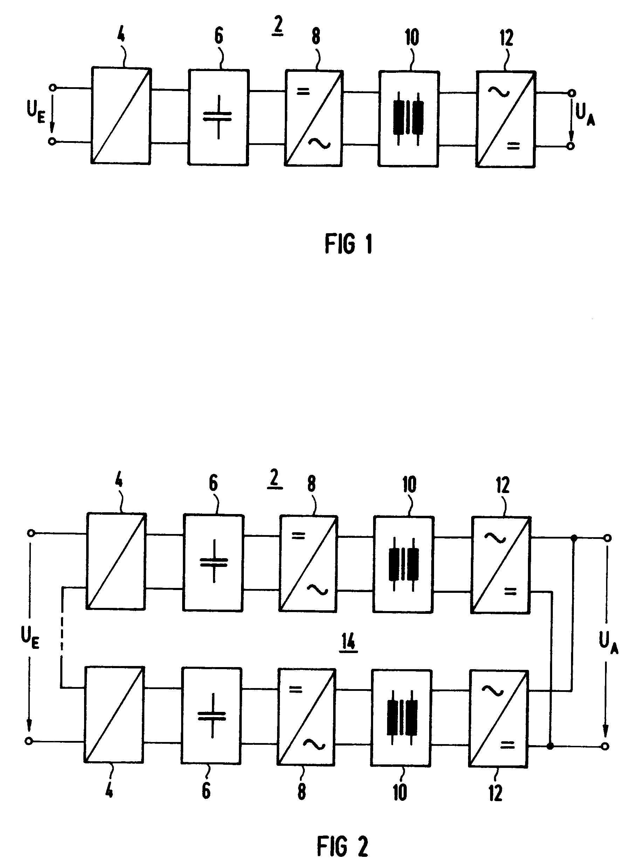

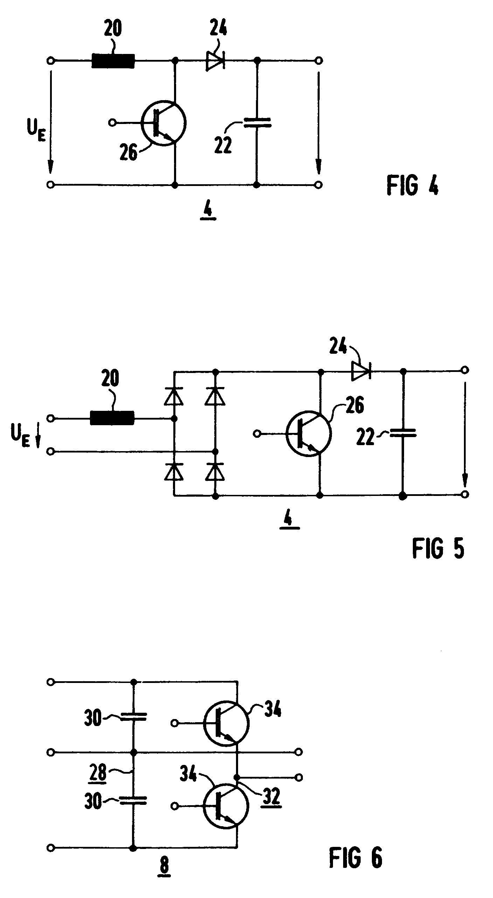

Die Figur 1 veranschaulicht ein Blockschaltbild einer ersten Ausführungsform einer erfindungsgemäßen Energieversorgungseinrichtung 2 für Reisezugwagen. Diese Energieversorgungseinrichtung 2 weist eingangsseitig einen Hochsetzsteller 4 auf, der ausgangsseitig mittels eines Zwischenkreisfilters 6 mit einem Wechselrichter 8 elektrisch verknüpft ist, an dessen Ausgang ein Transformator 10 angeschlossen ist. Ausgangsseitig weist diese Energieversorgungseinrichtung 2 einen Gleichrichter 12 auf, der die potentialgetrennte Ausgangsspannung des Transformators 10 in eine Gleichspannung U_{A} der Energieversorgungseinrichtung 2 umformt. Am Ausgang dieses Gleichrichters 12 können die Verbraucher des Reisezugwagens bzw. eines Schienenfahrzeugs direkt oder über weitere Stellglieder, beispielsweise einen mehrpulsigen Wechselrichter, angeschlossen werden und so potentialgetrennt vom Eingang, beispielsweise von einer Zugsammelschiene, mit Energie versorgt werden. Beispiele für die Ausgestaltung des Hochsetzstellers 4 und des Wechselrichters 8 sind in den Figuren 4, 5 und 6 dargestellt.

Der Hochsetzsteller 4, der mit einer Zugsammelschiene elektrisch verknüpft ist, erzeugt aus der anstehenden Eingangsspannung U_{E} eine geregelte Gleichspannung, die in ihrem Wert höher als der Scheitelwert der Eingangsspannung U_{E} ist. Mittels dieses Hochsetzstellers 4 wird dem Energienetz ein weitgehend sinusförmiger Strom mit cosφ=1 entnommen. Somit ist die Energieversorgungseinrichtung 2 gegenüber dem Energienetz ein netzfreundlicher Verbraucher mit geringem Blind- und Verzerrungsleistungsbedarf. Diese erzeugte geregelte Gleichspannung wird mittels des Zwischenkreisfilters 6 geglättet, wodurch am Eingang des Wechselrichters 8 eine stabilisierte Gleichspannung zur Verfügung steht. Der Wechselrichter 8 formt diese geregelte und geglättete Zwischenkreisspannung in eine Wechselspannung hoher Frequenz um, wobei der Wert dieser Frequenz wesentlich höher ist als der Wert der Frequenz der Eingangsspannung. Der diesem Wechselrichter 8 nachgeschaltete Transformator 10 ist für die hohe Frequenz dimensioniert, wodurch dieser Transformator 10 weitaus kleiner und leichter als ein entsprechender Transformator für die Frequenz der Eingangsspannung U_{E} ist. Der nachgeschaltete Gleichrichter 12 formt die Ausgangs-Wechselspannung des Transformators 10 in eine Gleichspannung U_{A}, die Ausgangsspannung der Energieversorgungseinrichtung 2 ist, um.

Die Figur 2 zeigt eine weitere Energieversorgungseinrichtung 14, die aus mehreren Energieversorgungseinrichtungen 2 nach Figur 1 besteht. Von den mehreren Energieversorgungseinrichtungen 2 sind in dieser Darstellung nur die erste und die n-te Energieversorgungseinrichtung 2 näher dargestellt. Bei dieser weiteren Energieversorgungseinrichtung 14 sind seine Energieversorgungseinrichtungen 2 am Eingang elektrisch in Reihe und ausgangsseitig elektrisch parallel geschaltet. Durch die Reihenschaltung der Hochsetzsteller 4 wird beispielsweise eine hohe Eingangsspannung U_{E} auf mehrere Hochsetzsteller 4 verteilt, wodurch jeder Hochsetzsteller 4 spannungsmäßig entsprechend gering belastet wird. Dadurch vermindert sich auch jeweils die Eingangsspannung eines Wechselrichters 8, wodurch jeweils auch für die abschaltbaren Leistungshalbleiter der Wechselrichter 8 jeweils Insulated-Gate-Bipolar-Transistors (IGBT) verwendet werden können. Damit werden auch für die Wechselrichter hohe Arbeitsfrequenzen realisierbar, die noch kleinere und leichtere Transformatoren 10 und Glättungsfilter 6 ermöglichen. Bei dieser Mehrfach-Reihenschaltung werden die Hochsetzsteller 4 versetzt getaktet, wodurch eine Vervielfachung der wirksamen Arbeitsfrequenz der modularen Hochsetzsteller 4 erreicht wird. Damit wird es möglich, bis zu hohen Frequenzen aktiv Störströme auf der Netzseite zu beeinflussen bzw. zu unterdrücken. Mittels der versetzten Taktung bei der Mehrfach-Reihenschaltung erhalt man die Möglichkeit, eine aktive Eingangs-Impedanz zu realisieren, wodurch die bisher verwendeten passiven Eingangs-Impedanzen (Drossel, Kondensator) sehr viel kleiner und leichter gemacht werden können bzw. ganz weggelassen werden können. Daraus resultiert wieder eine Verkleinerung der Einbaumasse der Energieversorgungseinrichtung 14.

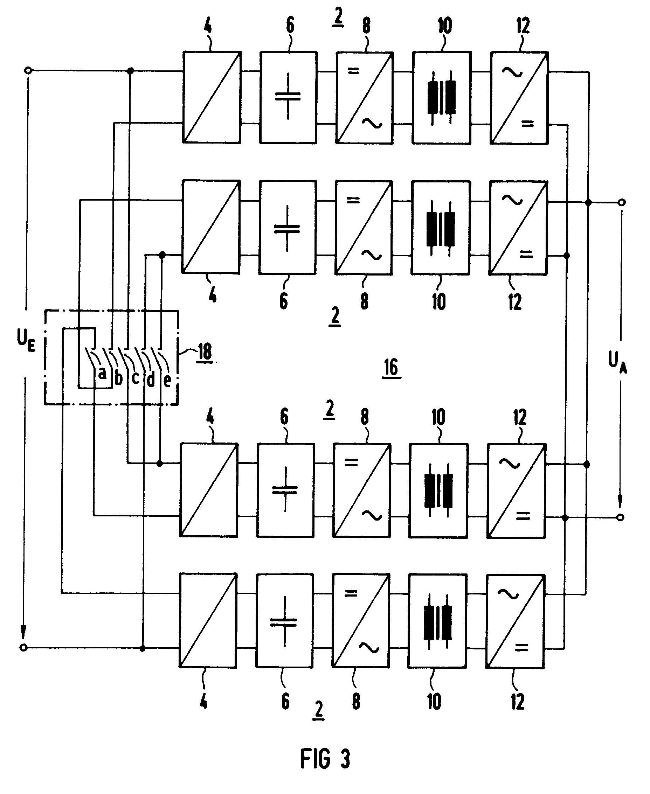

In der Figur 3 ist eine weitere Energieversorgungseinrichtung 16 dargestellt, die ebenfalls aus mehreren Energieversorgungseinrichtungen 2 nach Figur 1 besteht, wovon nur vier Energieversorgungseinrichtungen 2 dargestellt sind. Bei dieser Energieversorgungseinrichtung 16 sind die Energieversorgungseinrichtungen 2 nach Figur 1 eingangsseitig mittels einer Umschalteinrichtung 18 elektrisch in Reihe oder parallel schaltbar. Die Energieversorgungseinrichtungen 2 gemäß Figur 1 sind ausgangsseitig elektrisch parallel geschaltet. Sind die Schalter a bis d der Umschalteinrichtung 18 geschlossen, so sind jeweils zwei Energieversorgungseinrichtungen 2 eingangsseitig elektrisch in Reihe geschaltet, wobei diese wieder eingangsseitig elektrisch parallel geschaltet sind. Sind die Schalter a, b und e der Umschalteinrichtung 18 geschlossen, so sind die dargestellten Energieversorgungseinrichtungen 2 eingangsseitig elektrisch in Reihe geschaltet. Die Schalter a und b der Umschalteinrichtung 18 werden nicht benötigt, wenn jeweils zwei Hochsetzsteller 4 eingangsseitig elektrisch in Reihe geschaltet sind. Somit kann diese Energieversorgungseinrichtung 16 an unterschiedlichen Gleich- und Wechselspannungen der internationalen Bahnnetze, beispielsweise 1000 V, 16 2/3 Hz; 1500 V, 50 Hz; 1500 V; 3000 V, angepaßt werden. Mittels der Anzahl der Energieversorgungseinrichtungen 2 kann die Eingangsspannung jedes Hochsetzstellers 4 in Abhängigkeit der Eingangsspannung U_{E} der Energieversorgungseinrichtung 16 bestimmt werden. Außerdem kann man mittels der Anzahl der Energieversorgungseinrichtungen 2 in Verbindung mit der versetzten Taktung bestimmte Frequenzen bzw. Frequenzbereiche eliminieren.

Die Figuren 4 und 5 zeigen jeweils eine Ausführungsform eines Hochsetzstellers 4, wobei in Figur 4 ein Einquadrantensteller und in Figur 5 eine mögliche Schaltungsanordnung für einen Zweiquadrantensteller dargestellt ist. Eine Einquadrantensteller-Schaltung wird verwendet, wenn als Eingangsspannung U_{E} der Energieversorgungseinrichtung 2, 14 bzw. 16 eine Gleichspannung vorgesehen ist. Soll die Energieversorgungseinrichtung 2, 14 bzw. 16 an Gleich- und Wechselspannung betreibbar sein, so wird eine Zweiquadrantensteller-Schaltung verwendet. Alternativ kann auch eine Vierquadrantensteller-Schaltung verwendet werden. Die Elemente eines Hochsetzstellers 4 sind eine eingangsseitige Induktivität 20, ein ausgangsseitiger Kondensator 22, eine Entkopplungsdiode 24 und zumindestens ein Schalter 26. Der ausgangsseitige Kondensator 22 ist beispielsweise der Filterkondensator des Zwischenkreisfilters 6 gemäß Figur 1.

Die Figur 6 zeigt eine besonders einfache Schaltung für einen Wechselrichter 8, der aus einem Brückenzweig 28, bestehend aus zwei Kondensatoren 30, und aus einem Brückenzweig 32, bestehend aus zwei abschaltbaren Leistungshalbleitern 34, besteht. Die beiden Kondensatoren 30 sind beispielsweise der Filterkondensator des Zwischenkreisfilters 6 gemäß der Figur 1. Die IGBTs 34 enthalten antiparallele Freilaufdioden, die in dieser Figur nicht einzeln dargestellt sind. Diese Leistungshalbleiter 34 schalten abwechselnd mit einer Taktfrequenz, wodurch am Ausgang des Wechselrichters eine rechteckförmige Wechselspannung ansteht, deren Amplitude halb so groß ist wie die Spannung am Eingang des Wechselrichters 8 und deren Frequenz gleich der Taktfrequenz der IGBTs 34 ist.

## Patentansprüche

1. Energieversorgungseinrichtung (2) für Reisezugwagen, bestehend aus einem Eingangssteller mit Zwischenkreisfilter (6) und einem Wechselrichter (8) mit nachgeschaltetem Transformator (10), **dadurch gekennzeichnet,** daß als Eingangssteller ein Hochsetzsteller (4) verwendet wird und daß dieser Hochsetzsteller (4) und der Wechselrichter (8) jeweils als Stromrichterventile schnellschaltende, abschaltbare Leistungshalbleiter (26,34) aufweisen.

2. Energieversorgungseinrichtung (14) für Reisezugwagen, bestehend aus mehreren Energieversorgungseinrichtungen (2) nach Anspruch 1, **dadurch gekennzeichnet,** daß diese Energieversorgungseinrichtungen (2) eingangsseitig elektrisch in Reihe und ausgangsseitig elektrisch parallel geschaltet sind.

3. Energieversorgungseinrichtung (16) für Reisezugwagen, bestehend aus mehreren Energieversorgungseinrichtungen (2) nach Anspruch 1, **dadurch gekennzeichnet,** daß diese Energieversorgungseinrichtungen (2) eingangsseitig mittels einer Umschalteinrichtung (18) elektrisch in Reihe oder parallel und ausgangsseitig elektrisch parallel geschaltet sind.

4. Energieversorgungseinrichtung (2) nach Anspruch 1, **dadurch gekennzeichnet,** daß als Hochsetzsteller (4) ein Einquadrantensteller vorgesehen ist.

5. Energieversorgungseinrichtung (2) nach Anspruch 1, **dadurch gekennzeichnet,** daß als Hochsetzsteller (4) ein Zweiquadrantensteller vorgesehen ist.

6. Energieversorgungseinrichtung (2) nach Anspruch 1, **dadurch gekennzeichnet,** daß als Hochsetzsteller (4) ein Vierquadrantensteller vorgesehen ist.

7. Energieversorgungseinrichtung (2) nach Anspruch 1, **dadurch gekennzeichnet,** daß als Wechselrichter (8) ein einphasiger Hochfrequenzwechselrichter vorgesehen ist.

8. Energieversorgungseinrichtung (2) nach Anspruch 1, **dadurch gekennzeichnet,** daß als schnellschaltender, abschaltbarer Leistungshalbleiter (26,34) ein Insulated-Gate-Bipolar-Transistor vorgesehen ist.
